# EUROPEAN PATENT SPECIFICATION

(11) **EP 0 535 173 B1**
(45) Date of publication and mention of the grant of the patent: **07.06.1995**
(21) Application number: 92903580.6
(22) Date of filing: 03.02.1992
(51) Int. Cl.: A01G 23/095

(54) **FELLER GRAPPLE**
FÄLLER GREIFER
GRAPPIN D'ABATTEUSE

(30) Priority: 15.02.1991 FI 910735
(43) Date of publication of application: 07.04.1993
(73) Proprietor: MOISIO, Juha, SF-44670 Suovanlahti (FI)
(72) Inventor: MOISIO, Juha, SF-44670 Suovanlahti (FI); MOISIO, Jouko, SF-44500 Viitasaari (FI)
(74) Representative: Feldmann, Clarence Paul
(86) International application number: FI9200027
(87) International publication number: WO9214353

(56) References cited:
- SE-B- 465 157
- US-A- 3 542 099
- US-A- 4 974 648
- DERWENT'S ABSTRACT, No. C67 82 C/12, SU 673 455, publ. week 8012 (FOREST POWERMECHN INST).
- DERWENT'S ABSTRACT, No. H66 08 B/36, SU 634 937, publ. week 7936 (FOREST POWERMECHN INST).

## Description

The invention relates on a cutting, delimbing and trimming grapple for a multifunction tree harvester according the preamble of the independent claim.

US 4'974'648 (Probst) shows a device for lopping off felled trees with feed rollers and cutters installed an a suspended gripper frame. The feed rollers are fixed on and in the armes of the gripper frame and even the cutters. The armes of the frame are tiltable mounted to each other. So the cutters and the feed rollers are staying in different angles if a small or a big tree trunk is processed. The holding forces of the arms and the adhesion pressure forces of the drive wheels, which act against the tree and therefore against each other are mostly staying in an angle depending on the diameter of the trunk. So there exists a component of forces sideways. The shock loads arising from delimbing are affecting the frame by producing a moment.

### FELLER GRAPPLE

One of the main impediments involving felling, delimbing and cutting grapples can be traced to the operation of the delimbing cutters. The compressive force exerted by the cutter blades has usually varied with the size of the load, whereby a high pulling force exerted by the feed rollers to delimb large branches has enlarged the compressive force applied by the delimbing cutters against the trunk to be delimbed, resulting in a tendency of the cutters to choke. This has made it difficult to process the trunk flexibly. Concomitantly, the power required by the feller grapple increases considerably, demanding greater power requirements and more weight at the grapple hydraulic motors and higher strength and weight of the grapple itself.

The location of the feller grapple at the end of a long hydraulically actuated boom causes the weight of the grapple to decisively affect the operation of a multi-function tree harvester.

The thinning of a forest demands a high level of operating speed per felled tree from a tree harvester. The ability to process several trees from a single location becomes decisive under these conditions.

Object of the invention is to get a construction, which is able to reduce forces and moments affecting the frame which leads to a relatively light weight of the feller grapple.

This is realised by geometrically optimising the construction by adapting the geometry to the arising forces.

The characteristics of the invention are described in the claims.

Illustration 1 presents a simplified diagrammatic representation of the structural aspects of our invention, illustration 2 shows for purposes of structural comparison a diagrammatic representation of a structure typified by US Patent 3542 099, and illustration 3 shoes a structural diagrammatic representation of a common design.

Illustration 4 shows an application of the invention, depicted both perpendicularly and parallel to the direction of travel of a tree being processed.

When the grapple and the trunks being processed hang freely, then the loads arising from lifting and carrying the trunks are modest relative to the loads created by delimbing and the acceleration and deceleration of a trunk. If the grapple is dimensioned mainly to resist the loads created by delimbing, it will obviously with the addition of a small factor of safety also resist other loads which may give rise to load peaks.

Due to the criticalness of weight, the unpredictability of the loads and the complexity of the structure, the final definition of the structural strength of the grapple is best determined through trial runs.

This description seeks to strongly simplify the loading cases in order to set apart the characteristics mentioned in this patent application.

In the structure depicted in illustration 3, the feed roller 5 creates a couple M3 around an arm L3 at point 6. This couple stresses the frame 1. When the delimbing cutter 3 collides against a branch or whittles the trunk, large shock loadings such as the loads F1 and F2 are created, which acting around the arms L1 and L2 bring about the couples M1 and M2 at point 2. These couples also act against the frame 1.

The mass of the trunk 4 and the mass of the frame move in opposite directions, which greatly increases collision energies, particularly when long delimbing couple arms are involved.

Long couple arms demand a stiff design of the frame, thereby increasing its weight, which in turn require strong support arms against the forces F1, F2 and F3, further increasing the weight of the frame.

The results of the couples against the frame must be added, since all may obviously occur simultaneously.

A frame must essentially be dimensioned for stiffness, whereby a small increase in torque will have a significant effect on weight.

In the design represented by illustration 2 the trunk must be pressed during delimbing against the feed roller 5 at the upper part of the grapple. The delimbing cutters must carry the trunk and press it upwards in addition to the pressure required by delimbing. Structurally this design is inferior to the solution presented in illustration 3.

Illustration 1 presents a similarly simplified calculation model of the delimbing cutter forming the subject of this application. In this design the trunk travels through an arched structure hinged at its center. The same arched arms hold the feed rollers and their motors as well as the delimbing cutters. The design does not have a frame as such, as it has been replaced by a hinge pin, and thus the lack of a frame prevents the creation of inertia forces during deceleration or acceleration of the trunk and delimbing. The design of the arms and the location of its accessories, such as the hydraulic motors driving the feed rollers bring the center of gravity 9 of the arms close, L3, to the mounting points 8 of the delimbing cutters, which are located near the feed rollers. All forces F, F1 and F2 are near each other, and therefore high couples cannot be produced since the leverage arms remain short. The leverage arms L1 and L2 of the delimbing cutters are also mimimised to the greatest extent. The couples caused by the shock F1 and F2 of several branches being cut simultaneously should not be added together, since they actually nullify each other. Delimbing requires a certain speed of the trunk 1 and a reasonable mass of the grapple. In the design represented by this invention the mass of the grapple has been exploited to the maximum, while its lighter structure increases the reach and agility of the forest machine.

Illustration 4 represents one solution, where the motion of the tree has been achieved by means of hydraulically powered rubber feed rollers 1 provided with a suitable friction surface. The feed rollers 1 are mounted on two support arms 10 and 11 opened and closed by a double-acting hydraulic actuator 12. The support arms 10 and 11 also carry by means of a hinge pin 14 the lower delimbing cutters 2 and the upper delimbing cutters 3. Own actuators 15,16 are arranged for actuating the delimbing cutters. The drive actuators 16 of the upper delimbing cutters and the drive actuators 15 of the lower delimbing cutters are mounted on the support arms 10 and 11 at the pin locations 7. The upper and lower delimbing cutters 2 and 3 are operated by the double-acting hydraulic actuators 15 and 16, whereby the upper delimbing cutter 3 drive actuator 16 presses the cutters into delimbing position.

The delimbing cutters 2 and 3 are kept at the correct delimbing distance by means of the guide rollers 4 and 5, one of which acts as a length measuring device. The support arms 10 and 11 are joined together through the hinge pin 17, thus providing flexibility to allow the delimbing cutters 2 and 3 to follow the outline of the trunk, even though the tree might be strongly tapering or might present deformations in its shape and thickness. The feller grapple is mounted on the multi-function tree harvester through a hook 21. The feller grapple is brought into felling or delimbing and cutting position by the actuator 18. The grapple is rotated by the rotating actuator 20. A hydraulic motor retracts the cutting chain saw 22 into a protective casing whenever it is not in use.

The structure of the feller grapple depicted in the illustration allows for a multiplicity of use and an extremely low expenditure of energy during delimbing operations. The rollers 4 and 5 rotating on anti-friction bearings prevent the cutting edges 24 and 25 of the delimbing cutters 2 and 3 from cutting into the trunk, thereby substantially reducing the forces required in delimbing. The compressive force applied through the supporting arms 10 and 11 to the feed rollers 1 to move the trunk remains a separate entity acting solely on the feed rollers. The factors described above take on a particular importance during the season of bast growth; they also significantly reduce the energy required by a delimbing operation. This, in turn, widens the operating range and reduces the weight of the feller grapple. The principle of this design also significantly affects the loading characteristics of the feller grapple. The structure reduces the energy expended through shocks during delimbing. In a traditional design, the hinge 17 would have to resist delimbing shock loads acting over a leverage arm A and the acceleration forces of the trunk over a leverage arm E, while these forces could occur simultaneously and from opposite directions, and these forces would be dependent upon the the masses of the trunk being processed and of the delimbing grapple and upon the magnitude of the shocks caused by delimbing, and in many cases their directions would be opposite. In this solution, the acceleration and deceleration forces of the trunk act on the feed rollers 1, while the bearing support 14 of the delimbing cutters is located almost on the same centerline. Since during a delimbing operation the feller grapple usually hangs freely, the shock loads arising from a delimbing operation cannot greatly load the hinge 17, thereby permitting a lighter design of the parts 10 and 11 as well as of the whole grapple.

As the entire weight of the feller grapple is being held at the end of a long boom, even small reductions in weight can be successfully used to advantage either through a reduction of the gross weight of the multi-function tree harvester or through an increase in the reach of existing machinery.

This solution presents several further advantages over traditional designs in thinning cuts and under conditions where light wood must be processed. This invention makes it easy to gather trunks, previously cut or broken by storms, by pressing together the support arms 10 and 11 and opening the lower cutters to a suitable compressive position, thereby facilitating a secure grip even on difficult terrain. This invention offers two procedures to delimb and cut several trunks at the same time. The feller grapple is located on the first tree so that the lower cutters press it against the the upper cutters and the feed rollers, and the trunk is then cut. Keeping the cut trunk vertical, the feller grapple is moved to the root of the next tree, which is then similarly gripped by the lower cutters prior to being cut. This process continues until a sufficient number of trunks have been collected, at which point the bundle is delimbed and cut to length. On the other hand, a simultaneous processing, delimbing and cutting of several trunks can be carried out by gathering them in a bundle prior to delimbing and cutting. These procedures offer important advantages, since they eliminate several work phases by the multi-function tree harvester, permitting a more efficient exploitation of thinning stands and lower costs.

This invention may be put into practice in several ways using known components. The feed rollers may be replaced with driven wheels, materials may be high strength steel either in plate form or otherwise manufactured. Many components could be justifiably built of strong aluminium or some other known material. Known technology can be applied to the feller grapple to provide motion and measurements, and the feller grapple can be mounted to the multi-function tree harvester boom using known methods.

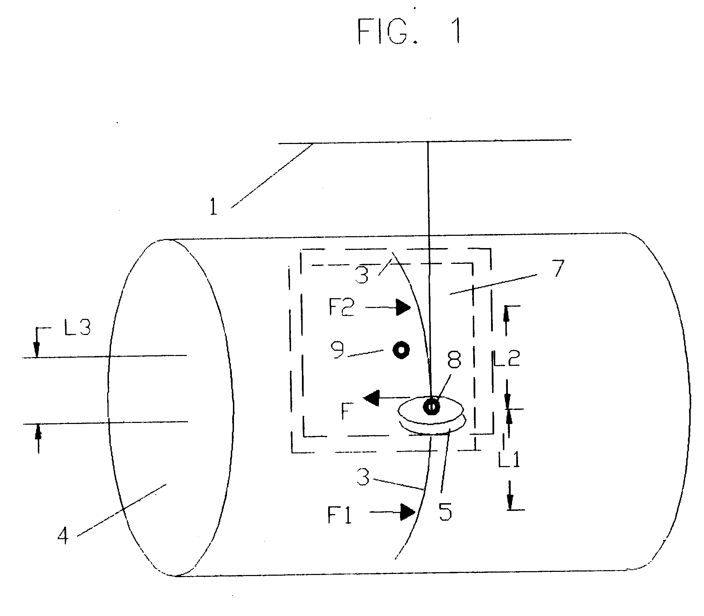

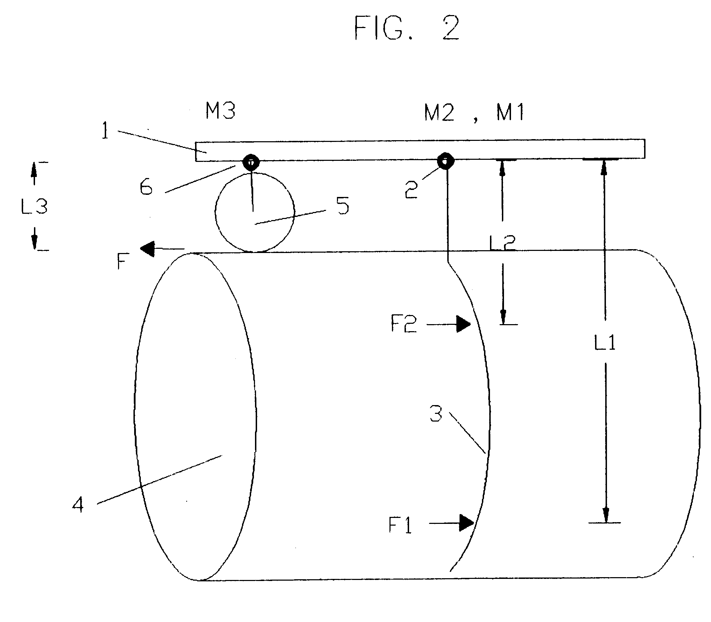

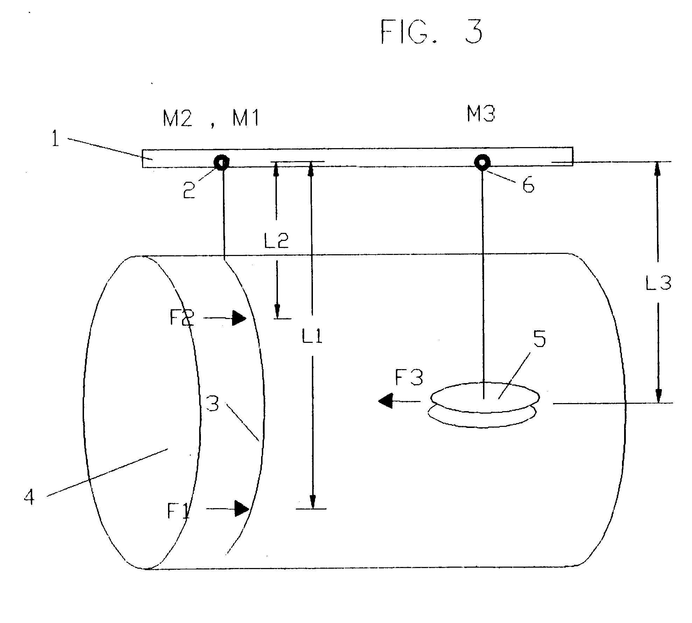

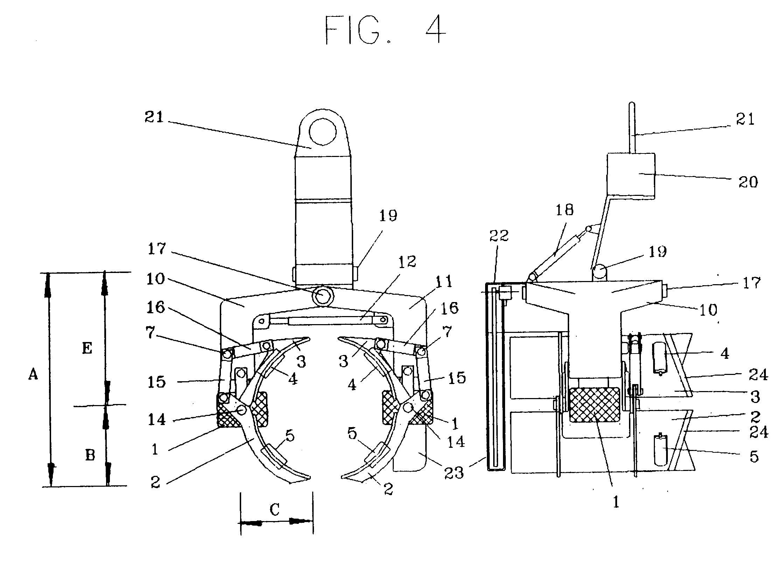

## Claims

1. A cutting, delimbing and trimming grapple for a multifunction tree harvester with a frame (10,11,17), feeding rollers (1) and delimbing cutters (2,3), wherein the feeding rollers (1) are mounted on the frame which has two support arms (10,11), which arms are tiltable connected by a hinge (17) and actuated by an actuator (12), characterised in that each of the cutters (2,3) is two parted, into an upper (3) and a lower delimbing cutter (2) tiltably connected by a hinge pin (14) arranged in the centerline perpendicular to the axis of the feed roller (1) and actuated by two actuators (15,16) and where the leverage arms (B,C) from the upper and lower delimbing cutters (2,3) to the hinge pin (14) are substantially shorter than the leverage arms (A,E) from the lower delimbing cutters (2) respectivly the feeding rollers (1) to the hinge (17) of the support arms (10,11).

2. A grapple of claim 1, characterized in that both actuators (15,16) actuate both delimbing cutters (2,3) on one supporting arm (10,11) having a common pin (7).

3. A grapple of claim 1, characterized in that each upper and lower delimbing cutter (2,3) is provided with a roller (4,5).

## Patentansprüche

1. Ein Fäll-, Entastungs- und Zuschneidegreifer für eine multifunktionale Baumerntemaschine mit einem Rahmen (10,11,17), Zuführrollen (1) und Entastungsmessern (2,3), wobei die Zuführrollen (1) an zwei Stützarmen (10,11) des Rahmens angeordnet sind, wobei die schwenkbaren Stützarme mittels einem Gelenk (17) und einem Antrieb (12) bewegbar sind,
**dadurch gekennzeichnet, dass** die Entastungsmesser (2,3) zweigeteilt sind in ein oberes (3) und ein unteres Entastungsmesser (2), die über einen Gelenkbolzen (14), der in einer Mittellinie senkrecht zu den Achsen der Zuführrollen (1) angeordnet ist, die mittels zweier Antriebe (15,16) getrieben sind, und dass die Hebelarme (B,C) von den oberen und unteren Entastungsmessern (2,3) zum Gelenkbolzen (14) wesentlich kürzer als die Hebelarme (A,E) von den unteren Entastungsmessern (2), beziehungsweise von den Zuführrollen (1) bis zum Gelenk (17) der Stützarme (10,11) sind.

2. Greifer nach Anspruch 1, dadurch gekennzeichnet, dass beide Antriebe (15,16), die die beiden Entastungsmesser (2,3) an einem Stützarm (10,11) treiben, an einen gemeinsamen Bolzen angreifen.

3. Greifer nach Anspruch 1, dadurch gekennzeichnet, dass jedes untere und jedes obere Entastungsmesser mit einer Rolle (4,5) versehen ist.

## Revendications

1. Grappin de coupe, d'ébranchage et d'émondage pour une récolteuse forestière multifonctions comportant un cadre (10,11,17), des rouleaux d'amenée (1) et des couteaux (2,3), dans lequel les rouleaux d'amenée (1) sont montés sur le cadre qui comporte deux bras supports (10,11), lesquels bras sont reliés avec possibilité de basculement par une articulation (17) et actionnés par un dispositif de commande (12), caractérisé en ce que chacun des couteaux (2,3) est en deux parties, formant un couteau d'ébranchage supérieur (3) et un couteau d'ébranchage inférieur (2), reliées avec possibilité de basculement par une goupille d'articulation (14) placée dans la ligne médiane perpendiculairement à l'axe du rouleau d'amenée (1) et actionnée par deux dispositifs de commande (15,16), et où les bras de levier (B,C) entre les couteaux d'ébranchage supérieur et inférieur (2,3) et la goupille d'articulation (14) sont notablement plus courts que les bras de levier (A,E) entre respectivement les couteaux d'ébranchage inférieurs (2) ou les rouleaux d'amenée (1) et la goupille (17) des bras supports (10,11).

2. Grappin selon la revendication 1, caractérisé en ce que les deux dispositifs de commande (15,16) actionnent les deux couteaux d'ébranchage (2,3) sur un bras support (10,11) ayant une goupille commune (7).

3. Grappin selon la revendication 1, caractérisé en ce que chacun des couteaux d'ébranchage supérieur et inférieur (2,3) est muni d'un rouleau (4,5).
